(19) **Europäisches Patentamt / European Patent Office / Office européen des brevets**

(11) **EP 2 832 706 B1**

(12) **EUROPEAN PATENT SPECIFICATION**

(45) Date of publication and mention
of the grant of the patent:
**15.03.2017 Bulletin 2017/11**

(21) Application number: **13769484.0**

(22) Date of filing: **25.03.2013**

(51) Int Cl.:
**C04B 28/02** (2006.01)     **B28C 7/04** (2006.01)
**C04B 22/08** (2006.01)     **C04B 22/10** (2006.01)
**C04B 22/14** (2006.01)     **C04B 24/06** (2006.01)
**C04B 24/26** (2006.01)     **C04B 40/02** (2006.01)
**C04B 28/14** (2006.01)     **C04B 20/10** (2006.01)

(86) International application number:
**PCT/JP2013/058644**

(87) International publication number:
**WO 2013/146712 (03.10.2013 Gazette 2013/40)**

(54) **RAPID HARDENING CEMENT**

SCHNELLERSTARRENDER ZEMENT

CIMENT À DURCISSEMENT RAPIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.03.2012 JP 2012083201**

(43) Date of publication of application:
**04.02.2015 Bulletin 2015/06**

(73) Proprietor: **Denka Company Limited
Tokyo 103-8338 (JP)**

(72) Inventors:
• **NISHIOKA, Asaaki
Tokyo 103-8338 (JP)**
• **MORI, Taiichiro
Itoigawa-city
Niigata 949-0393 (JP)**
• **NANASAWA, Akira
Itoigawa-city
Niigata 949-0393 (JP)**
• **YOSHINO, Ryoetsu
Itoigawa-city
Niigata 949-0393 (JP)**
• **IWANAMI, Kazuhide
Itoigawa-city
Niigata 949-0393 (JP)**

• **YAMAMOTO, Kenji
Itoigawa-city
Niigata 949-0393 (JP)**
• **KAWAUCHI, Toshio
Itoigawa-city
Niigata 949-0393 (JP)**
• **SHIRAI, Kentaro
Itoigawa-city
Niigata 949-0393 (JP)**
• **MATSUMOTO, Masao
Machida-city
Tokyo 194-8560 (JP)**

(74) Representative: **Yeadon IP Limited
Leeds Innovation Centre
103 Clarendon Road
Leeds LS2 9DF (GB)**

(56) References cited:
**EP-A1- 2 161 247      JP-A- H0 717 749
JP-A- H05 177 124      JP-A- H08 310 845
JP-A- 2000 143 324     JP-A- 2001 048 632
JP-A- 2001 247 343     JP-A- 2001 253 753
JP-A- 2005 061 863     US-A1- 2009 025 613**

• **DATABASE WPI Week 200707 Thomson
Scientific, London, GB; AN 2007-064855
XP002750755, & JP 2006 335620 A (TAIHEIYO
MATERIAL KK) 14 December 2006 (2006-12-14)**

**Description**

Technical Field

The present invention relates to a rapid hardening cement.

Background Art

The rapid hardening cement is obtained by adding a rapid hardening agent such as calcium aluminate to cement and has a feature of capable of developing high strength in an extremely short time compared to normal portland cement. Therefore, the rapid hardening cement has been provided for practical use, for example, as a repairing material, a spraying material for tunnels, a material facilitating early demolding for concrete secondary products, and the like in the form of paste, mortar, and concrete.

Examples of the rapid hardening cement include a spraying material comprising a quick-setting aid prepared by adding an alkanolamine to calcium aluminate, calcium sulfoaluminate, and calcium aluminosilicate (Japanese Patent No. 4746429), an extremely stiff consistency concrete containing $3CaO \cdot 3Al_2O_3 \cdot CaF_2$, an inorganic sulfate, and the like (Japanese Patent Laid-Open No. H2-180740), an ultra-rapid hardening cement composition comprising a clinker containing a $3CaO \cdot SiO_2$ solid solution and $11CaO \cdot 7Al_2O_3 \cdot CaF_2$, anhydrous gypsum, aluminosilicate calcium glass, ground granulated blast furnace slag, a high-range water-reducing agent, a setting modifier, and the like (Japanese Patent Laid-Open No. 2007-320833), a rapid hardening clinker composition prepared by adding $Fe_2O_3 \cdot CaF_2$ to C12A7 ($12CaO \cdot 7Al_2O_3$) system (Japanese Patent Laid-Open No. H9-268037), and a rapid hardening clinker composition prepared by adding $Fe_2O_3$ and $CaF_2$ to a clinker raw material containing $12CaO \cdot 7Al_2O_3$ as the main component (Japanese Patent Laid-Open No. H6-115986).

On the other hand, examples of techniques for controlling the setting and hardening of a cement or a rapid hardening cement include a composition having an improved fluidity prepared by controlling, with water, the wetness of a cement containing calcium aluminate as the main component and a method for producing the same (Japanese Patent Laid-Open No. H11-255542) and a cement composition having a given amount of adhesive water caused by spraying water on the cement in addition to the control of the amount of water-soluble alkali and the total amount of hemihydrate gypsum and dihydrate gypsum as a technique for controlling fluidity immediately after kneading in concrete having a low water/cement ratio using a polycarboxylic acid-based dispersant (Japanese Patent Laid-Open No. 2007-45647).

Patent Literature

Patent Literature 1: Japanese Patent No. 4746429
Patent Literature 2: Japanese Patent Laid-Open No. H2-180740
Patent Literature 3: Japanese Patent Laid-Open No. 2007-320833
Patent Literature 4: Japanese Patent Laid-Open No. H9-268037
Patent Literature 5: Japanese Patent Laid-Open No. H6-115986
Patent Literature 6: Japanese Patent Laid-Open No. H11-255542
Patent Literature 7: Japanese Patent Laid-Open No. 2007-45647

US2009/025613A1 discloses a cement mixed with a polycarboxylic acid-based water-reducing agent, a calcium aluminate cement, calcium sulfate and a setting modifier. JP2006335620A discloses a cement comprising Ordinary Portland cement, a polycarboxylic acid-based water-reducing agent, a calcium aluminate cement, a calcium sulfate and a setting modifier. EP2161247A1 discloses a process that allows the stabilisation of polycarboxylate polymers in the presence of cement at high temperatures. An anti-oxidising agent is blended with the polycarboxylate polymer.

Summary of Invention

The rapid hardening cement is mixed with aggregate and the like, kneaded with water, and placed. Therefore, it is necessary to maintain fluidity for a certain period of time required for kneading and placing. With respect to this point, the setting and hardening time for gelation of conventional rapid hardening cement may become short depending on the type of raw material cement to be used, and in some cases, the placing time, especially the placing time at a low temperature of about 0 to 10°C, could not been sufficiently secured.

Although there are known methods for securing fluidity by adding a setting modifier such as a hydroxy acid, such as citric acid, or a salt thereof as described in Patent Literature 3 and a method of modifying cement with water as described in Patent Literatures 6 and 7, these methods still have room for improvement in terms of prolonging the setting and hardening time. Therefore, an object of the present invention is to provide a rapid hardening cement having a prolonged setting and hardening time by pursuing an effective method for prolonging the setting and hardening time in a low-temperature environment. Further, another object of the present invention is to provide a method for preparing such a rapid hardening cement.

As a result of intensive studies to solve the above problems, the present inventors have found that it is possible to prepare a rapid hardening cement in which gelling time is long; setting and hardening time is secured; and short-time strength is secured, by premodifying cement with a polycarboxylic acid-based water-reducing agent before the cement is mixed with a rapid hardening agent. Generally, when cement is modified with water, the setting and hardening time is secured, but the strength is not secured. Further, sufficient setting and hardening time as well as short-time strength cannot be secured at the same time only by adding the polycarboxylic acid-based water-reducing agent.

In one aspect, the present invention that has been completed based on the above findings is a rapid hardening cement for use in forming a cement paste, mortar or concrete, comprising: (A) a cement whose surface has been pretreated with a polycarboxylic acid-based water-reducing agent as a modifier; (B) a rapid hardening agent comprising calcium aluminate and gypsum; and (C) a setting modifier comprising at least one of a carbonate and/or a hydroxy acid; wherein an addition amount of the modifier is 0.1 to 1.0% by mass relative to the cement before modification.

In one embodiment of the rapid hardening cement according to the present invention, the amount of (B) the rapid hardening agent is 5 to 30% by mass of the total mass of the modified cement and the rapid hardening agent, and the amount of (c) the setting modifier is 0.01 to 5% by mass relative to the total mass of the modified cement and the rapid hardening agent.

In another embodiment of the rapid hardening cement according to the present invention, it suffices a following formula: $I_{3600\ cm^{-1}}$ (0.1 minutes)/$I_{3600\ cm^{-1}}$ (hardening. 0.2, wherein "$I_{3600\ cm^{-1}}$ (0.1 minutes)" represents an intensity of an absorption peak in a vicinity of 3600 cm$^{-1}$ showing an OH group and a hydrate at a lapse of 0.1 minutes from a start of water addition, and "$I_{3600\ cm^{-1}}$ (hardening)" represents an intensity of an absorption peak in a vicinity of 3600 cm$^{-1}$ showing an OH group and a hydrate at a lapse of hardening time.

In another aspect, the present invention is cement paste, cement mortar, or cement concrete prepared using the rapid hardening cement according to the present invention.

In one embodiment of the cement paste, cement mortar, or cement concrete according to the present invention, gelling time for an increase of 1°C at 5°C is 10 minutes or more.

In another embodiment of the cement paste, cement mortar, or cement concrete according to the present invention, hardening time at 5°C is 20 minutes or more.

In still another aspect, the present invention is a hardened material prepared from the cement paste, cement mortar, or cement concrete according to the present invention.

In still another aspect, the present invention is a method of using cement paste, cement mortar, or cement concrete comprising placing the cement paste, cement mortar, or cement concrete according to the present invention at a temperature environment of 1 to 10°C.

In still another aspect, the present invention is a method for producing a rapid hardening cement comprising: a step 1 of treating a cement with a polycarboxylic acid-based water-reducing agent as a modifier to form a surface-modified cement, wherein an addition amount of the modifier is 0.1 to 1.0% by mass relative to the cement before modification; a step 2 of mixing the surface-modified cement with a rapid hardening agent comprising calcium aluminate and gypsum; and a step 3 of adding, at any time point, a setting modifier comprising at least one of a carbonate and/or a hydroxy acid.

The rapid hardening cement according to the present invention can secure sufficient operation time at the placing because the cement has a long setting and hardening time required for gelation and hardening.

Brief Description of Drawings

Figure 1 is a schematic diagram showing the whole relationship between the setting and hardening time and the paste temperature on a rapid hardening cement paste having a normal setting and hardening rate; and

Figure 2 is a schematic diagram showing the relationship between the setting and hardening time and the paste temperature on a rapid hardening cement paste having a normal setting and hardening rate in the early stage.

Description of Embodiments

<1. Cement>

The rapid hardening cement according to the present invention comprises a cement as the base component. Examples of the cement that can be used include, but are not particularly limited to, portland cement such as ordinary cement, high-early-strength cement, ultra high-early-strength cement, moderate-heat cement, sulfate resisting cement, low-heat cement, and oil-well cement; blended cement such as blast furnace slag cement, fly-ash cement, and pozzolan cement; and eco-cement. The content of the modified cement in the rapid hardening cement may be, but not particularly limited to, typically 70 to 95% by mass, more typically 75 to 95% by mass relative to the total mass of the modified cement and the rapid hardening agent.

<2. Modifier>

In the present invention, cement is pretreated with a water-reducing agent based on a polycarboxylic acid (typically, a polycarboxylic acid-based polymeric compound) as a modifier before the cement is mixed with the rapid hardening agent. Although the present invention is not intended to be limited by any theory, it is believed that the effect of prolonging the setting and hardening time is exhibited by the adsorption of the polycarboxylic acid-based water-reducing agent on the surface of cement particles. The polycarboxylic acid- based water-reducing agent cannot provide sufficient effect if it is added after the cement is mixed with the rapid hardening agent or simultaneously with the time when the cement is mixed with the rapid hardening agent.

Examples of other water-reducing agents include water-reducing agents based on lignin (typically lignin sulfonate), melamine (typically melamine sulfonate), and naphthalene (typically naphthalene sulfonic acid). However, according to the present invention, it is essential to use a polycarboxylic acid-based water-reducing agent as a water-reducing agent in the modifier in terms of securing the effect of prolonging gelling time in the setting and hardening stage and securing 3-hour compressive strength. When a water-reducing agent based on lignin or melamine is used, it is difficult to secure gelling time and 3-hour compressive strength. When a water-reducing agent based on naphthalene is used, it is possible to secure gelling time to some extent, but it is difficult to secure 3-hour compressive strength. When only water is used as a modifier, gelling time is secured, but 3-hour compressive strength cannot be secured.

Among the chemical admixtures called a high-performance AE water-reducing agent or a high-range water-reducing agent in the field of concrete, the polycarboxylic acid-based water-reducing agent generally has a molecular skeleton of a comb-type graft copolymer which has a chemical structural formula having a carboxyl group or a group in which a hydrogen atom at a terminal of the carboxyl group is substituted by a metal and having a polyoxyethylene chain or the like in a side chain. This copolymer serves as a component of the polycarboxylic acid-based water-reducing agent. The polycarboxylic acid-based water-reducing agent can be classified into two types, a water-reducing agent based on an olefin-maleate copolymer and a water-reducing agent based on an acrylic salt-acrylic ester. These water-reducing agents normally include compounds generally called a polycarboxylic acid ether-based compound, a polyether carboxylic acid-based compound, and a multicomponent copolymer containing a carboxyl group (-COOH) and a sulfonic acid group ($-SO_3H$). The polycarboxylic acid-based water-reducing agent also includes a (meth)acrylic acid-based copolymer having a polyalkylene glycol chain and a maleic acid-based copolymer having a polyalkylene glycol chain. These may be used singly or in combination of two or more thereof.

Examples of the (meth)acrylic acid-based copolymer having a polyalkylene glycol chain include a copolymer in which a pendant chain of the polymer has a plurality of oxyalkylene or carboxyl groups and the oxyalkylene group is used as the main component of the polymer; and a P(EO) acrylic acid in which acrylic acid is grafted on a polyoxyethylene-oxypropylene glycol.

Examples of the maleic acid-based copolymer having a polyalkylene glycol chain include a methylpolyethylene glycol vinyl ether-maleic anhydride copolymer, a polyethylene glycol allyl ether-maleic anhydride copolymer, a methylpolyethylene glycol allyl ether-maleic anhydride copolymer, and a methyl methacrylate polyethylene glycol-maleic acid copolymer.

Examples of commercially available polycarboxylic acid-based water-reducing agents include "DARLEXSUPER 100, 200, 300, 1000N" series (Grace Chemicals Co., Ltd.) and "Rheobuild SP-8" series (BASF Pozzolith Ltd.) which are polycarboxylic acid-based polymeric compounds.

The polycarboxylic acid-based water-reducing agent preferably contains about 10 to 40% by mass of a polycarboxylic-based acid water-reducing agent (in terms of a solid content) and about 60 to 90% by mass of water. Since this reduces the viscosity, it can be sprayed so as not to be solidified at the tip of a nozzle during spraying.

<3. Modification Method>

With respect to the order of adding the modifier, it is necessary to allow the modifier to be adsorbed on the surface of cement before the cement is mixed with a rapid hardening agent. If the modifier is allowed to be adsorbed simultaneously with the time when the cement is mixed with the rapid hardening agent, an improvement in short-time strength cannot be sufficiently secured. Other than the above, there is no particular limitation on the order of adding the modifier. Chemical admixtures such as a setting modifier and other water-reducing agents can also be added to cement simultaneously with the modifier. As a matter of course, these chemical admixtures may also be added after the modifier is added.

The modification method is not particularly limited as long as it is a method that allows a modifier to be adsorbed on the surface of cement, but the modifier is preferably added to the cement in the form of an aqueous solution by spraying it on the cement, more preferably the modifier is gasified by heating and sprayed, so that the modifier may be uniformly dispersed when added to the cement. Then, kneading is preferably performed so that the modifier may spread over the whole cement. Any spray nozzle generally used for applications such as coating, wetness control, and moisturization can be used as a spray nozzle to be used for spraying.

Further, effective methods include: a method of modifying cement by increasing the pressure of a liquid or air to form particles as fine as possible from a nozzle in order to spray the liquid; and a method of gasifying a modifier to subject it to mixing and adsorbing operation through a fluidized bed. Furthermore, a method of modifying cement by spraying a modifier from a spray nozzle while continuing the mixing and grinding of the cement with a ball mill or the like is also possible. The particle size of the modifier formed into particles will be about 10 to 200 $\mu$m when a spray nozzle is used, several $\mu$m when the modifier is formed into droplets in the mixing and adsorbing operation, and about 1 to 100 $\mu$m which is the same order as the particle size of particles in the mixing and grinding with a ball mill or the like.

When the modifier is sprayed, the content of water in the modifier is preferably about 60% by mass or more in order to prevent solidification at the tip of the nozzle, and the content is preferably about 90% by mass or less so that the amount of the polycarboxylic acid-based water-reducing agent (in terms of a solid content) which exhibits modification function may not be excessively reduced.

Thus, the modifier contains water in many cases. Therefore, if the modifier is excessively added, the relative humidity of atmosphere such as air around the cement during the spraying operation will be increased to cause dew formation in a mixing or a transportation equipment to allow water to be adsorbed on the surface of cement, preventing the strength development performance of the cement. For this reason, the modifier is added in an amount of 1% by mass or less, more preferably 0.5% by mass or less, relative to the cement before modification. If the amount exceeds 1% by mass, dew formation is likely to occur in atmospheric environments such as air around the cement during the spraying.

However, if the addition amount of the modifier is too small, the effect of prolonging gelling time will be insufficient. Therefore, the modifier is added in an amount of 0.1% by mass or more, more preferably 0.2% by mass or more, relative to the cement before modification.

The modifier is chemically adsorbed on the surface of cement, and the time required for adsorption is short in the order of second. For this reason, several seconds to 60 seconds are sufficient for the mixing and modification time, and the modifier which has once been chemically adsorbed is not desorbed by physical operation except that it thermally evaporates. Therefore, possible modification operation includes: a method of spraying the modifier from a spray nozzle during the pressure feeding of raw materials in a transportation duct when cement is received from a lorry vehicle into a raw material tank by pneumatic transportation; and a method of spraying the modifier from a spray nozzle in the middle of the mixing and grinding of the cement with a ball mill or the like. Since the modifier is strongly chemically adsorbed on the surface of cement particles after modification, the cement can then be subjected to physical unit operation such as mixing operation with a rapid hardening agent.

<4. Rapid Hardening Agent>

(1) Calcium Aluminate

Calcium aluminate is a component generally used as a rapid hardening agent and is indispensable for exhibiting rapid hardenability. Calcium aluminate is a mineral generally obtained by the synthesis using a CaO raw material, an $Al_2O_3$ raw material, and optionally a $SiO_2$ raw material, etc. in an electric furnace or kiln at 1,200 to 1,700°C, followed by slow cooling or rapid cooling. An example of the composition includes 35 to 50% by mass of CaO, 40 to 55% by mass of $Al_2O_3$, and 1 to 15% by mass of $SiO_2$. Examples of the chemical substances include $3CaO \cdot Al_2O_3$, $12CaO \cdot 7Al_2O_3$, $11CaO \cdot 7Al_2O_3 \cdot CaF_2$, $CaO \cdot Al_2O_3$, $2CaO \cdot Al_2O_3 \cdot SiO_2$, $CaO \cdot Al_2O_3 \cdot 2SiO_2$, $3CaO \cdot 3Al_2O_3 \cdot CaF_2$, and $3CaO \cdot 2Na_2O \cdot 5Al_2O_3$, and $12CaO \cdot 7Al_2O_3$ is preferred.

If the content of calcium aluminate is too high, abnormal expansion will occur after hardening, while if the content of calcium aluminate is too low, short-time strength will be insufficient. Therefore, the content of calcium aluminate in the rapid hardening cement is preferably 2 to 30% by mass, more preferably 5 to 25% by mass.

Calcium aluminate may be present in a crystalline form or in a vitreous form, but calcium aluminate in a vitreous form obtained by rapid cooling of a molten material in an electric furnace or the like is preferred. When the content of the vitreous form is 60% by mass or more, calcium aluminate will be excellent in short-time strength.

The fineness of calcium aluminate is preferably 3,000 to 9,000 cm$^2$/g in terms of a Blaine specific surface area (hereinafter, referred to as a Blaine value).

(2) Gypsum

Gypsum is also an important component for a rapid hardening agent, and it is indispensable in the rapid hardening cement according to the present invention since it acts to form a rapid hardening hydrate, Ettringite, together with the hydration of calcium aluminate. If the content of gypsum is too high, abnormal expansion will occur after hardening, while if the content of gypsum is too low, rapid hardening performance will be insufficient. Therefore, the content of gypsum in the rapid hardening cement is preferably 2 to 30% by mass, more preferably 5 to 25% by mass. Gypsum may be any of anhydrous gypsum, dihydrate gypsum, and hemihydrate gypsum.

The fineness of gypsum is preferably 3,000 to 9,000 cm$^2$/g in terms of the Blaine value.

The amount of the rapid hardening agent (calcium aluminate and gypsum) is 5 to 30% by mass, preferably 5 to 25 parts by mass in total, of the total mass of the modified cement and the rapid hardening agent. If the total amount of calcium aluminate and gypsum is less than 5% by mass, it is difficult for the resulting mortar/concrete to show a 3-hour compressive strength of 20 MPa or more as the rapid hardening performance. If the total addition amount of calcium aluminate and gypsum is increased exceeding 30 parts by mass, the rapid hardening performance in terms of 3-hour compressive strength will not be increased, and abnormal expansion after hardening is likely to occur.

<5. Setting Modifier>

In the present invention, it is indispensable to add a setting modifier selected from carbonates and hydroxy acids. Examples of the carbonates include potassium carbonate, sodium carbonate, lithium carbonate, sodium hydrogencarbonate, and potassium hydrogencarbonate. Examples of the hydroxy acids and the like include hydroxy acids such as citric acid, tartaric acid, gluconic acid, malic acid, acetic acid, adipic acid, and succinic acid, and salts thereof. Examples of the hydroxy acid salts include a sodium, potassium, calcium, magnesium, ammonium, and aluminum salts of the above acids, including, for example, sodium citrate and sodium gluconate. The setting modifier can be used singly or in combination of two or more thereof.

The addition amount of the setting modifier is preferably 0.01 to 5% by mass, more preferably 0.05 to 2% by mass, relative to the total mass of the modified cement and the rapid hardening agent (calcium aluminate + gypsum). If the setting modifier is added in an amount of less than 0.01% by mass, sufficient gelling time cannot be secured, and even if the addition amount of the setting modifier is increased exceeding 5% by mass, gelling time may be decreased. Thus, it is difficult to stably secure sufficient gelling time, for example, a gelling time of 10 minutes or more. The setting modifier can be added to the cement and/or the rapid hardening agent at any time point.

<6. Other Cement Admixtures>

In the rapid hardening cement according to the present invention, various cement admixtures which are commonly used can be added as necessary. For example, a rapid hardening agent other than the above-described calcium aluminate and gypsum, a water-reducing agent, and the like can be added. It is also effective to add a suitable amount of pozzolanic materials such as silica fume and a material such as $3CaO \cdot 3Al_2O_3 \cdot CaSO_4$ in order to impart denseness or expansibility.

<7. Characteristics of the Rapid Hardening Cement according to the Present Invention>

(1. Gelling time, Hardening Time, and 3-Hour Compressive Strength)

In the present invention, gelling time is defined as one of the indices for evaluating the setting and hardening characteristics of the rapid hardening cement. The gelling time is defined as follows: Toyoura standard sand (200 g) is mixed with a rapid hardening cement (modified cement + rapid hardening agent (calcium aluminate + gypsum) = 200 g) at an ambient temperature of 5°C to prepare a rapid hardening cement mortar, and thereto is added water (60 g) to prepare 460 g of a mixture. The relationship between the time after the start of water addition and the increase in temperature of the cement mortar is measured. The gelling time is defined as the time required for the temperature of the cement mortar to increase by 1°C or 2°C due to the heat generation accompanying hardening. Since the amount of a setting modifier and other cement admixtures added is small, the amount thereof is not particularly limited as long as the total amount of the rapid hardening cement, sand, and water satisfies the condition of 460 g. For example, if the setting modifier is 10 g, the measurement will be performed on a sample of 460 + 10 = 470 [g].

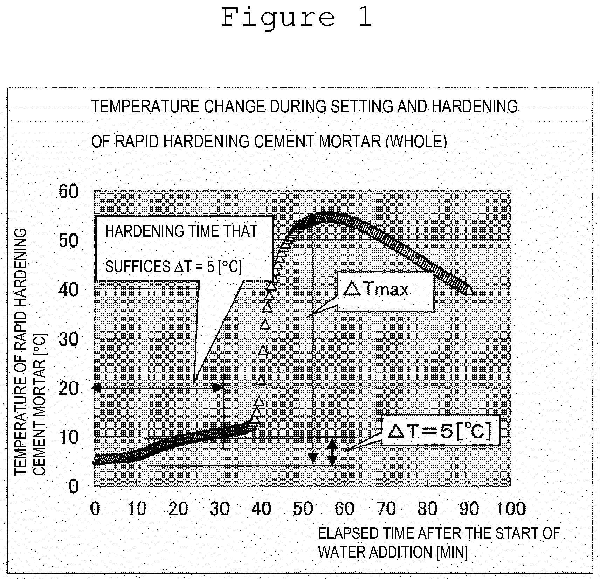

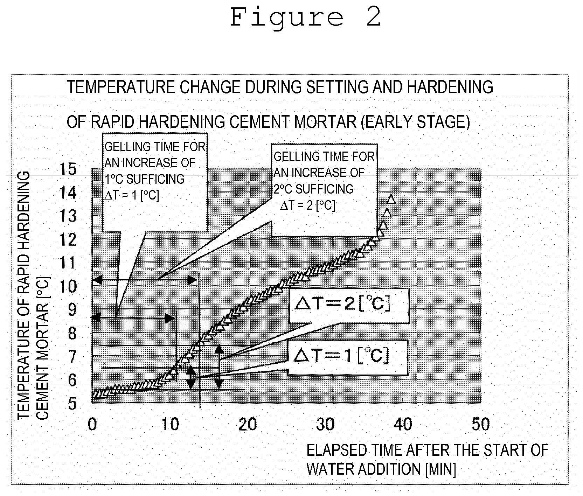

In the present invention, the time required for the temperature to increase by 1°C is called "gelling time for an increase of 1 °C", and the time required for the temperature to increase by 2°C is called "gelling time for an increase of 2°C". Further, in the present invention, hardening time is defined as one of the indices for evaluating the setting and hardening characteristics of the rapid hardening cement. The hardening time is defined as follows: To 400 g of a rapid hardening cement mortar is added 60 g of water. The relationship between the time after the start of water addition and the increase in temperature of the cement mortar is measured. The hardening time is defined as the time required for the temperature of the kneaded cement mortar to increase by 5°C due to the heat generation accompanying hardening. Figures 1 and 2 show an example of the relationship between the elapsed time after the start of water addition and the increase in temperature when water is added to the rapid hardening cement mortar according to the present invention to set and harden the same under a condition of 5°C.

The rapid hardening cement mortar loses fluidity as the temperature increases due to gelation and hardening.

When the rapid hardening cement mortar is gelled, its viscosity is increased, and at the hardening, the rapid hardening mortar is hardened to rapidly increase strength. In a preferred embodiment, after the lapse of about 3 hours, the strength of the mortar hardened body exceeds 20 MPa, which is sufficient for practical use in civil engineering structures and the like. Specifically, the viscosity of the rapid hardening cement mortar is about 800 cps immediately after kneading, but the viscosity of the rapid hardening cement mortar exceeds 10,000 cps accompanied with the gelation thereof. Thus, it is difficult to secure operations such as kneading with a mixer, and pouring, placing and tamping of the rapid hardening mortar. Examples of the measuring methods of the viscosity of the rapid hardening cement mortar after kneading include Test Methods for Quality Control of Shrinkage-compensating Mortar with J-funnel (Japan Highway Public Corporation Standard JHS 312) as a method of measuring the drop time, the funnel being KC-57 J funnel (Highway Public Corporation type), the mortar flow shown in JIS R5210, and a rotational viscosity measuring method by JIS Z8803 "Liquid viscosity-measuring method". Generally, the rapid hardening cement mortar is hardened after the lapse of hardening time, and about 1 N/mm$^2$ is recorded by the Proctor Penetration Test Method (JIS A 6204 attached document I).

When the gelling time and hardening time are too short, it will be impossible to secure the operating time for generally performing the placing of structures with a cement concrete or the like prepared by adding an aggregate (such as sand and gravel) to the rapid hardening cement paste or the repair work with a cement mortar or the like prepared by adding sand or the like to the rapid hardening cement paste. In order to practically perform the mass placing of mortar, concrete, or the like using a concrete pump or the like in the construction site in a cold season, it is desired that the gelling time and hardening time at 5°C be sufficiently long.

In one embodiment of the rapid hardening cement paste, cement mortar, or cement concrete according to the present invention, the gelling time for a temperature increase of 1°C or 2°C in an environment of 5°C is 10 minutes or more, and it may be, for example, 10 to 20 minutes.

In one embodiment of the rapid hardening cement paste, cement mortar, or cement concrete according to the present invention, the hardening time at 5°C is 20 minutes or more, preferably 25 minutes or more, and it may be, for example, 25 to 80 minutes.

In one embodiment of the rapid hardening cement paste, cement mortar, or cement concrete according to the present invention, 3-hour compressive strength at 5°C that can be secured is 20 MPa or more, typically 20 to 30 MPa. When the strength is less than 20 MPa, the strength is insufficient and below the practical strength for civil engineering and construction applications or the like. The 3-hour compressive strength is a value obtained by measuring the compressive strength of the cement mortar after the lapse of 3 hours from the start of water addition by JIS R5201 "Physical Testing Methods for Cement".

(2. FT-IR Spectra)

It is effective to use FT-IR spectra as a method for investigating the hydration behavior during gelation and hardening of the rapid hardening cement prepared using a cement after modification. The FT-IR spectra are diffuse reflectance infrared absorption spectra obtained from a radius of about 3 mm and a depth of about 1 to 2 μm on the surface of a dried rapid hardening cement mortar powder sample. Therefore, the spectra are believed to be effective for qualitative evaluation of OH groups and hydrates on the particle surface.

The absorption spectra by the diffuse reflectance FT-IR of the rapid hardening cement show high peak values at 3600 cm$^{-1}$, 1400 cm$^{-1}$, and 1100 cm$^{-1}$. Among these, the peak values at 1400 cm$^{-1}$ and 1100 cm$^{-1}$ are almost constant from immediately after water is supplied to the paste until it is hardened, and these peaks are peaks peculiar to the components of the rapid hardening cement. The peak in the vicinity of 3600 cm$^{-1}$ shows OH groups and hydrates on the surface.

After the start of water addition to the rapid hardening cement, the intensity of the peak in the vicinity of 3600 cm$^{-1}$ is gradually increased with the progress of the hydration reaction. In the rapid hardening cement according to the present invention, since the hydration reaction slowly proceeds, the increase in the absorption peak intensity is slow when the intensity of the absorption peak in the vicinity of 3600 cm$^{-1}$ after the lapse of hardening time is referred to as a standard. For example, the peak intensity at $I_{3600\ cm^{-1}}$ after the lapse of short time from the start of water addition is low, and the hydration reaction hardly proceeds. For example, in one embodiment of the rapid hardening cement according to the present invention, it suffices a following formula: $I_{3600\ cm^{-1}}$ (0.1 minutes)/$I_{3600\ cm^{-1}}$ (hardening) $\leq 0.2$, typically $0.01 \leq I_{3600\ cm^{-1}}$ (0.1 minutes)/$I_{3600\ cm^{-1}}$ (hardening) $\leq 0.1$, wherein "$I_{3600\ cm^{-1}}$ (0.1 minutes)" represents the intensity of an absorption peak in the vicinity of 3600 cm$^{-1}$ showing an OH group and a hydrate at a lapse of 0.1 minutes from the start of water addition, and "$I_{3600\ cm^{-1}}$ (hardening)" represents the intensity of an absorption peak in the vicinity of 3600 cm$^{-1}$ showing an OH group and a hydrate at a lapse of hardening time. Further, in one embodiment of the rapid hardening cement according to the present invention, it suffices a following formula: $I_{3600\ cm^{-1}}$ (17 minutes)/$I_{3600\ cm^{-1}}$ (hardening) $\leq 0.6$, typically $0.3 \leq I_{3600\ cm^{-1}}$ (17 minutes)/$I_{3600\ cm^{-1}}$ (hardening) $\leq 0.5$, wherein "$I_{3600\ cm^{-1}}$ (17 minutes)" represents the intensity of an absorption peak in the vicinity of 3600 cm$^{-1}$ showing an OH group and a hydrate at a lapse of 17 minutes from the start of water addition, and "$I_{3600\ cm^{-1}}$ (hardening)" represents the intensity of an absorption peak in the vicinity of 3600 cm$^{-1}$ showing an OH group and a hydrate at a lapse of hardening time.

The rapid hardening cement according to the present invention has high operability and workability since it has long setting and hardening time. Therefore, it can be spread, for example, with a grader, a bulldozer, a finisher, and the like. Further, it can provide high strength promptly by tamping and compaction with a hammer, a tired roller, a vibratory roller, and the like. The rapid hardening cement according to the present invention is excellent in operability and workability particularly in a low temperature environment and can be suitably used for placing, for example, in a temperature environment of 1 to 10°C.

The hardened material of the rapid hardening cement paste according to the present invention can be used, as mortar and concrete, for the lining of exposed natural ground surfaces and for the lining for repairing a tunnel or the like, in a tunnel, for example, for a road, a railroad, a driving channel, and the like.

<Production Method>

The rapid hardening cement according to the present invention can be produced by premodifying a cement by the method as described above and then mixing a rapid hardening agent with the cement. The order of adding other components is not particularly limited. The rapid hardening cement paste can be produced only by adding water to the rapid hardening cement and kneading the mixture with a common mixer, preferably with a forced action mixer. If the addition amount of water is too large, segregation will occur, while if it is too small, fluidity will not be obtained. Therefore, the addition amount of water may be preferably 10 to 50 parts by mass, more preferably 15 to 45 parts by mass, typically 20 to 40 parts by mass, relative to 100 parts by mass of the rapid hardening cement (except sand and gravel).

Examples

Hereinafter, examples of the present invention will be described. However, these examples are provided for illustration purposes only, and the present invention is not intended to be limited to these examples.

(Example 1)

An ordinary portland cement (cement No. 1) manufactured by the Omi plant of DENKI KAGAKU KOGYO K.K. was prepared. Tables 1 and 2 show the amount of the substances in cement No. 1 measured by the Rietveld method and the results of the chemical analysis by JIS R5202, respectively. Specifically, in the Rietveld method, the amount of substances was quantitatively determined from the diffraction intensity by X-ray powder diffraction using "SIROQUANT Version 2.5" (manufactured by Sietronics Pty Ltd). Further, Table 3 shows the density and Blaine value of cement No. 1 measured by JIS R5201 "Physical Testing Methods for Cement".

[Table 1]

| Amount of substances in cement No. 1 by the Rietveld method [% by mass] | | | | | | |
|---|---|---|---|---|---|---|
| $3CaO \cdot SiO_2$ | $2CaO \cdot SiO_2$ | $3CaO \cdot Al_2O_3$ | $4CaO \cdot Al_2O_3 \cdot Fe_2O_3$ | $CaSO_4 \cdot 2H_2O$ | $CaSO_4 \cdot 1/2H_2O$ | $CaCO_3$ |
| 54.5 | 18.3 | 7.7 | 10.9 | 2.8 | 1.4 | 4.4 |

[Table 2]

| Results of chemical analysis of cement No. 1 by JIS R5202 [% by mass] | | | | | | |
|---|---|---|---|---|---|---|
| Ignition loss | insol. | $SO_3$ | $SiO_2$ | $TiO_2$ | $Fe_2O_3$ | $Al_2O_3$ |
| 1.82 | 0.06 | 2.05 | 20.15 | 0.23 | 3.10 | 5.33 |
| CaO | MgO | $Na_2O$ | $K_2O$ | Cl | $Na_2Oeq$ | f-CaO |
| 64.60 | 0.79 | 0.19 | 0.41 | 0.012 | 0.46 | 0.8 |

[Table 3]

| Density (g/cm$^3$) | Blaine specific surface area (cm$^2$/g) |
|---|---|
| 3.15 | 3,050 |

Cement No.1 was modified depending on the experimental run numbers using various modifiers, such as a polycarboxylic acid-based water-reducing agent, water, and a setting modifier as described in Table 5. The modification method included, while rotating cement No.1 at a circumferential speed of 60 m/s by a swinging plate-type mixer (Omni Mixer: manufactured by Chiyoda Technical & Industrial Co. Ltd.), adding a modifier with an atomizer, and continuing the rotation for 1 minute.
The details of the modifiers described in Table 5 are the following:

- Polycarboxylic acid-based water-reducing agent: An aqueous solution of "DARLEXSUPER 1000N (trade name)" manufactured by Grace Chemicals Co., Ltd. (the content of water is 70% by mass)
- β-NS (naphthalene-based water-reducing agent): An aqueous solution of "FT-500V (trade name)" manufactured by Grace Chemicals Co., Ltd. (the content of water is 50% by mass) •Setting modifier: An aqueous solution of a 50:50 [mass ratio] mixture of potassium carbonate (manufactured by Asahi Glass Co., Ltd.) and purified citric acid (manufactured by Fuso Chemical Co., Ltd.) (the content of water is 67% by mass)

Next, the following raw materials (A) to (G) were mixed in the respective parts by mass described in Table 4 to produce rapid hardening cement mortar. Next, thereto was added (H) water in the parts by mass described in Table 4, and the mixture was kneaded to produce hardened materials of the rapid hardening cement mortar of Inventive Examples and Comparative Examples. Curing conditions were set to 5°C and 60% relative humidity.

(A) Cement: Modified or unmodified cement No. 1
(B) Calcium aluminate ($12CaO \cdot 7Al_2O_3$): A molten material at about 1600°C in a 2000 kVA electric furnace was rapidly cooled and blown away to obtain vitrified calcium aluminate. The vitrified calcium aluminate was ground into a powder having a fineness of 4,500 cm$^2$/g (Blaine value). The product was manufactured by the Omi plant of DENKI KAGAKU KOGYO K.K. (However, the modification was performed by the methods described in Table 5 in some Experimental Examples.)
(C) Anhydrous gypsum: A product ground into a powder having a fineness of 4,500 cm$^2$/g (Blaine value) which was manufactured by the Omi plant of DENKI KAGAKU KOGYO K.K.
(D) Sand: Toyoura standard sand
(E) Water-reducing agent: A polyalkylallyl sulfonate-based water-reducing agent manufactured by Dai-Ichi Kogyo Seiyaku Co., Ltd. (trade name: SELFLOW 110P)
(F) Potassium carbonate: A product manufactured by Asahi Glass Co., Ltd.
(G) Purified citric acid: A product manufactured by Fuso Chemical Co., Ltd.
(H) Water: Industrial water

[Table 4]

| A | Cement | 180 | parts by mass |
|---|---|---|---|
| B | Calcium aluminate | 10 | parts by mass |
| C | Anhydrous gypsum | 10 | parts by mass |

(continued)

| | | | |
|---|---|---|---|
| D | Sand | 200 | parts by mass |
| E | Water-reducing agent (SELFLOW 110P) | 4 | parts by mass |
| F | $K_2CO_3$ | 1.00 | parts by mass |
| G | Citric acid | 0.20 | parts by mass |
| H | Water | 60 | parts by mass |

<Hardening Characteristics>

The relationship between the time after water addition and kneading and the temperature increase was measured for 400 g of the rapid hardening cement mortar to measure the setting and hardening characteristics. In Table 5, gelling time for an increase of 1 °C, gelling time for an increase of 2°C, hardening time, and 3-hour compressive strength are as defined above. $\Delta T_{max}$ represents the maximum temperature increase after starting water addition and kneading. After the lapse of gelling time, the viscosity of the mortar increases, and the mortar shows a stiffened state. After the lapse of hardening time, the mortar was hardened, and about 1 $N/mm^2$ was recorded by the proctor penetration test method (JIS A 6204 attached document I). The maximum temperature increase $\Delta T_{max}$ is correlated with the 3-hour compressive strength, and the higher the $\Delta T_{max}$ is, the higher the 3-hour compressive strength is.

[Table 5]

| No. | Setting and hardening characteristics | | | | | Cement modifier | | Modification method of rapid hardening agent | | |
| | Gelling time for an increase of 1°C [min] | Gelling time for an increase of 2°C [min] | Hardening time [min] | ΔTmax [°C] | 3-Hour compressive strength [MPa] | Type | Addition Amount [% by mass relative to cement] | Type | Addition Amount [% by mass relative to rapid hardening agent] | |
| | | | | | | | | | Setting modifier | Water |
| 1 | 4 | 7 | 21 | 50.1 | 25 | Untreated | 0.00% | Untreated | 0.00% | 0.00% |
| 2 | 3.5 | 6.5 | 13.5 | 38.6 | 18 | Untreated | 0.00% | Setting modifier is sprayed on rapid hardening agent | 0.05% | 0.31% |
| 3 | 3 | 5 | 12 | 40.4 | 19 | Untreated | 0.00% | Setting modifier is sprayed on rapid hardening agent | 0.03% | 0.31% |
| 4 | 10 | 13 | 25 | 45.1 | 23 | Polycarboxylic acid-based water-reducing agent:Setting modifier = 1:1 (mass ratio) | 0.31% + 0.31% | Untreated | 0.00% | 0.00% |
| 5 | 10 | 13 | 26 | 49.4 | 25 | Polycarboxylic acid-based water-reducing agent | 0.31% | Untreated | 0.00% | 0.00% |
| 6 | 19 | 26.5 | 78 | 46.4 | 23 | Polycarboxylic acid-based water-reducing agent:Setting modifier = 1:1 (mass ratio) | 0.62% + 0.62% | Untreated | 0.00% | 0.00% |
| 7 | 16 | 20 | 25 | 37 | 18 | Water | 0.31% | Untreated | 0.00% | 0.00% |
| 8 | 14.5 | 18 | 22 | 35.2 | 16 | Setting modifier:Water = 1:9 (mass ratio) | 0.31% | Untreated | 0.00% | 0.00% |
| 9 | 10 | 13 | 18.5 | 37.3 | 18 | β-NS | 0.31% | Untreated | 0.00% | 0.00% |

| No. | Setting and hardening characteristics | | | | | Cement modifier | | Modification method of rapid hardening agent | | |
| | Gelling time for an increase of 1°C [min] | Gelling time for an increase of 2°C [min] | Hardening time [min] | ΔTmax [°C] | 3-Hour compressive strength [MPa] | Type | Addition Amount [% by mass relative to cement] | Type | Addition Amount [% by mass relative to rapid hardening agent] | |
| | | | | | | | | | Setting modifier | Water |
| 10 | 12 | 16 | 25 | 45 | 22 | Polycarboxylic acid-based water-reducing agent | 0.31% | Water is sprayed on rapid hardening agent | 0.00% | 0.70% |

EP 2 832 706 B1

In Experiment No. 1 in which the cement was not modified, both the gelling time for an increase of 1°C and the gelling time for an increase of 2°C were less than 10 minutes, and the hardening time was less than 25 minutes. In Experiment Nos. 2 and 3, in which the rapid hardening admixture was modified with water and the setting modifier, both the gelling time for an increase of 1°C and the gelling time for an increase of 2°C were less than 10 minutes, and the hardening time was also less than 25 minutes; and the AT was 45°C or less, and the 3-hour compressive strength was also less than 20 MPa.

On the other hand, in Experiment Nos. 4 to 6 in which the cement was modified with the polycarboxylic acid-based water-reducing agent, both the gelling time for an increase of 1°C and the gelling time for an increase of 2°C were 10 minutes or more, and the hardening time was also 20 minutes or more; and the $\Delta T_{max}$ was 45°C or more, and the 3-hour compressive strength was also 20 MPa or more.

In Experiment No. 7, as a result of modification of the cement with water, both the gelling time for an increase of 1°C and the gelling time for an increase of 2°C were 10 minutes or more, and the hardening time was 20 minutes or more; but the $\Delta T_{max}$ was as low as 37°C, and the 3-hour compressive strength was also as low as 18 MPa.

In Experiment No. 8, as a result of modification with the setting modifier, both the gelling time for an increase of 1°C and the gelling time for an increase of 2°C were 10 minutes or more, and the hardening time was 20 minutes or more; but the $\Delta T_{max}$ was as low as 35.2°C, and the 3-hour compressive strength was also as low as 16 MPa.

In Experiment No. 9, as a result of modification with the naphthalene-based water-reducing agent, both the gelling time for an increase of 1°C and the gelling time for an increase of 2°C were 10 minutes or more, but the hardening time was less than 20 minutes; and the $\Delta T$ was as low as 37.3°C, and the 3-hour compressive strength was also as low as 18 MPa.

In Experiment No. 10, the cement was modified with the polycarboxylic acid-based water-reducing agent, and in addition, the rapid hardening admixture was modified with water. Also in this case, both the gelling time for an increase of 1°C and the gelling time for an increase of 2°C were 10 minutes or more; the hardening time at 5°C was 20 minutes or more; and a 3-hour compressive strength of 20 MPa or more was secured.

<Comparison of Absorption Spectra by FT-IR>

Here, the intensity of the absorption peak indicating the presence of OH groups and hydrates appearing in the vicinity of 3600 cm$^{-1}$ at a lapse of a certain period of time from the start of water addition was separately measured by FT-IR for the rapid hardening cement mortar of Experiment No. 1 and No. 6.

The test method will be described. Water addition to the rapid hardening cement mortar was started under a condition of 5°C. The mortar was kneaded for a predetermined period of time as described in Table 6 based on JIS R5201 "Physical Testing Methods for Cement", and then a part of the mortar was extracted with acetone through a filter paper to stop the hydration reaction,. In order to completely stop the hydration reaction, 10 parts by volume of acetone was used relative to 1 part by volume of mortar. Then, the mortar in which the hydration reaction had been stopped was sieved through a sieve with a nominal opening of 88 $\mu$m specified by JIS Z8801-1 "Test Sieves made of Metal Wire Cloth" using 1 part by volume of acetone relative to 1 part by volume of the mortar to remove sand in the mortar on the sieve and thus to obtain a paste. During this operation, the mortar on the sieve was manually wet-cracked with acetone so as to pass through the sieve as much as possible. The sample that had completely passed through the 88-$\mu$m sieve was dried and allowed to stand in a desiccator with silica gel for 24 hours. Then, the resulting powder was subjected to FT-IR analysis. The results are shown in Table 6.

The specification of an FT-IR apparatus is the following:

Manufacturer: Agilent Technologies Inc. FTS-175C
Measuring method: Diffuse reflectance method
Apparatus conditions: Resolution: 8 cm, integration counts: 1024, Kubelka-Munk conversion
Background: KBr powder was heated to 200°C in a diffuse reflectance apparatus and then cooled to 30°C, followed by measuring.
Operating environment: Vacuum, 30°C

The rapid hardening cement mortar No. 1 showed an $I_{3600\ cm-1}$ value as high as 2.5 or more at any of 0.1 minutes, 17 minutes, and 35 minutes after the start of water addition. Thus, it is possible to understand that a large number of OH groups and hydrates are present on the surface of the rapid hardening cement mortar; the hydration reaction of the rapid hardening cement mortar is proceeding; and the hydration reaction is not suppressed. On the other hand, in the case of No. 6 using the cement which had been premodified and suppressed in gelation, the FT-IR spectra in the setting and hardening stage showed, at 0.1 minutes, 17 minutes, 34 minutes, and 78 minutes, a magnitude relation of $I_{3600\ cm-1}$ (0.1 minutes) < $I_{3600\ cm-1}$ (17 minutes) < $I_{3600\ cm-1}$ (34 minutes) < $I_{3600\ cm-1}$ (78 minutes), and the FT-IR spectra of the unhardened rapid hardening cement paste at 0.1 minutes, 17 minutes, and 34 minutes showed a lower intensity than that at 78 minutes at the time of hardening. Thus, it is possible to understand that a small number of OH groups and hydrates are present on the surface of the rapid hardening cement mortar, and the hydration reaction of the rapid hardening cement paste is suppressed. Moreover, the FT-IR spectrum at 0.1 minutes after water addition showed a low intensity as low as $I_{3600 cm-1}$ = 0.3, which shows that the hydration is particularly suppressed. The $I_{3600 cm-1}$ (0.1 minutes)/$I_{3600 cm-1}$ (hardening), which is the ratio of $I_{3600 cm-1}$ at 0.1 minutes after the start of water addition to $I_{3600 cm-1}$ at the time of hardening, exactly shows the hydration rate of the surface of the rapid hardening cement mortar. Therefore, this ratio can be used for the prediction of the setting and hardening time of the rapid hardening cement paste. When the ratio of $I_{3600 cm-1}$ (0.1) of the unhardened rapid hardening cement mortar at 0.1 minutes immediately after water addition to $I_{3600 cm-1}$ (hardening) is 0.2 or less, it can be predicted that the rapid hardening cement mortar has a gelling time of 10 minutes and a hardening time of 20 minutes or more.

[Table 6]

| Experiment No. 1 | | |
|---|---|---|
| Elapsed time after the start of water addition | $I_{3600cm-1}$ | $I_{3600cm-1}/I_{3600cm-1}$(hardening) |
| 0.1 minutes | 2.9 | 0.95 |
| 17 minutes | 2.65 | 0.87 |
| 21 minutes (hardening) | 3.05 | 1.00 |
| | | |
| Experiment No. 6 | | |
| Elapsed time after the start of water addition | $I_{3600cm-1}$ | $I_{3600cm-1}/I_{3600cm-1}$ (hardening) |
| 0.1 minutes | 0.3 | 0.09 |
| 17 minutes | 1.6 | 0.47 |
| 34 minutes | 3.4 | 0.88 |
| 78 minutes (hardening) | 3.85 | 1.00 |

(Example 2: No. 11)

A rapid hardening cement mortar was produced under the same conditions as in Experiment No. 1 except that the timing of adding a modifier was changed, and the resulting mortar was hardened by adding water thereto. Specifically, the unmodified cement No. 1 and the components (B) to (G) described above were mixed at the same time, and then thereto were added a polycarboxylic acid-based water-reducing agent and (H) water, followed by kneading. Setting and hardening characteristics were evaluated in the same manner as in Example 1. The results are shown in Table 7. In Experiment No. 11, 0.31% of the modifier was added simultaneously with water. As a result, both the gelling time for an increase of 1°C and the gelling time for an increase of 2°C were less than 10 minutes, and the hardening time was also less than 20 minutes; and the $\Delta T_{max}$ was as low as 38.5°C, and the 3-hour compressive strength was also as low as 18 MPa.

(Example 3: No. 12)

A rapid hardening cement mortar was produced under the same conditions as in Experiment No. 1 except that the timing of adding a modifier was changed, and the resulting mortar was hardened by adding water thereto. Specifically, the unmodified cement No. 1 and the components (B) to (G) described above were mixed at the same time, and then thereto were added a polycarboxylic acid-based water-reducing agent and (H) water, followed by kneading. Setting and hardening characteristics were evaluated in the same manner as in Example 1. The results are shown in Table 7. In Experiment No. 12, 0.62% of the modifier was simultaneously added with water. As a result, both the gelling time for an increase of 1°C and the gelling time for an increase of 2°C were less than 10 minutes, and the hardening time was less than 20 minutes; and the $\Delta T_{max}$ was as low as 38.1°C, and the 3-hour compressive strength was also as low as 17 MPa.

(Example 4: No. 13)

A rapid hardening cement mortar was produced under the same conditions as in Experiment No. 1 except that the timing of adding a modifier was changed, and the resulting mortar was hardened by adding water thereto. Specifically, the cement No. 1 and the rapid hardening agent were simultaneously modified with a polycarboxylic acid-based water-reducing agent, and then the components (D) to (H) described above were mixed at the same time, followed by kneading. Setting and hardening characteristics were evaluated in the same manner as in Example 1. The results are shown in Table 7. In Experiment No. 13, both the gelling time for an increase of 1°C and the gelling time for an increase of 2°C were 10 minutes or more, but the hardening time was less than 20 minutes. Further, the $\Delta T_{max}$ was as low as 35.5°C, and the 3-hour compressive strength was also as low as 16 MPa.

[Table 7]

| No. | Setting and hardening characteristics | | | | | Cement modifier | | Modification method of rapid hardening agent | | |
| | Gelling time for an increase of 1°C [min] | Gelling time for an increase of 2°C [min] | Hardening time [min] | ΔTmax [°C] | 3-Hour compressive strength [MPa] | Type | Amount added [% by mass relative to cement] | Type | Amount added [% by mass relative to rapid hardening agent] | |
| | | | | | | | | | Setting modifier | Water |
|---|---|---|---|---|---|---|---|---|---|---|
| 11 | 4.5 | 7.5 | 11.5 | 38.5 | 18 | Untreated | 0.31% | Untreated | 0.00% | 0.00% |
| 12 | 5 | 8 | 12 | 38.1 | 17 | Untreated | 0.62% | Untreated | 0.00% | 0.00% |
| 13 | 13 | 15.5 | 19 | 35.5 | 16 | Polycarboxylic acid-based water-reducing agent | 0.31% | 0.3% by mass of polycarboxylic acid-base water-reducing agent relative to rapid hardening agent | 0.00% | 0.00% |

**Claims**

1. A rapid hardening cement for use in forming a cement paste, mortar or concrete, comprising:

   (A) a cement whose surface has been pretreated with a polycarboxylic acid-based water-reducing agent as a modifier;
   (B) a rapid hardening agent comprising calcium aluminate and gypsum; and
   (C) a setting modifier comprising at least one of a carbonate and/or a hydroxy acid;

   wherein an addition amount of the modifier is 0.1 to 1.0% by mass relative to the cement before modification.

2. The rapid hardening cement according to claim 1, wherein the amount of (B) the rapid hardening agent is 5 to 30% by mass of the total mass of the modified cement and the rapid hardening agent, and the amount of (C) the setting modifier is 0.01 to 5% by mass relative to the total mass of the modified cement and the rapid hardening agent.

3. The rapid hardening cement according to claim 1 or claim 2, satisfying a formula:

$$I_{3600\ cm^{-1}}\ (0.1\ minutes)/I_{3600\ cm^{-1}}\ (hardening) \leq 0.2;$$

   wherein "$I_{3600\ cm^{-1}}$ (0.1 minutes)" represents an intensity of an absorption peak in a vicinity of 3600 $cm^{-1}$ showing an OH group and a hydrate at a lapse of 0.1 minutes from a start of water addition; and
   wherein "$I_{3600\ cm^{-1}}$ (hardening)" represents an intensity of an absorption peak in a vicinity of 3600 $cm^{-1}$ showing an OH group and a hydrate at a lapse of hardening time.

4. Cement paste, cement mortar, or cement concrete prepared using the rapid hardening cement according to any one of claims 1 to 3.

5. The cement paste, cement mortar, or cement concrete according to claim 4, wherein gelling time for an increase of 1 °C at 5°C is 10 minutes or more.

6. The cement paste, cement mortar, or cement concrete according to claim 4 or claim 5, wherein hardening time at 5°C is 20 minutes or more.

7. A hardened material prepared from the cement paste, cement mortar, or cement concrete according to any one of claims 4 to 6.

8. A method of using cement paste, cement mortar, or cement concrete comprising placing the cement paste, cement mortar, or cement concrete according to any one of claims 4 to 6 at a temperature environment of 1 to 10°C.

9. A method for producing a rapid hardening cement comprising:

   a step 1 of treating a cement with a polycarboxylic acid-based water-reducing agent as a modifier to form a surface-modified cement, wherein an addition amount of the modifier is 0.1 to 1.0% by mass relative to the cement before modification;
   a step 2 of mixing the surface-modified cement with a rapid hardening agent comprising calcium aluminate and gypsum; and
   a step 3 of adding, at any time point, a setting modifier comprising at least one of a carbonate and/or a hydroxy acid.


**Patentansprüche**

1. Schnell erstarrender Zement zur Verwendung beim Formen einer Zementpaste, von Mörtel oder Beton, umfassend:

   (A) einen Zement, dessen Oberfläche mit einem Wasser-Reduktionsmittel auf Polycarbonsäure basierend als ein Modifizierungsmittel vorbehandelt worden ist;

(B) ein Schnellhärtemittel, das Calciumaluminat und Gips umfasst; und

(C) ein Abbindemodifizierungsmittel, das wenigstens eins aus einem Carbonat und/oder einer Hydroxycarbonsäure umfasst; wobei eine zusätzliche Menge des Modifizierungsmittels 0,1 bis 1,0% gewichtsmäßig in Bezug auf den Zement vor der Modifizierung beträgt.

2. Schnell erstarrender Zement nach Anspruch 1, wobei die Menge von (B) des Schnellhärtemittels 5 bis 30% gewichtsmäßig der Gesamtmasse des modifizierten Zements und des Schnellhärtemittels beträgt, und die Menge von (C) des Abbindemodifizierungsmittels 0,01 bis 5% gewichtsmäßig in Bezug auf die Gesamtmasse des modifizierten Zements und des Schnellhärtemittels beträgt.

3. Schnellhärtezement nach Anspruch 1 oder Anspruch 2, der folgende Formel erfüllt:

$$I_{3600\,cm^{-1}}\ (0{,}1\ \text{Minuten})/I_{3600\,cm^{-1}}\ (\text{Härtung}) \leq 0.2;$$

wobei " $I_{3600\,cm^{-1}}$ (0,1 Minuten)" eine Intensität einer Absorptionsspitze von ungefähr 3600 cm$^{-1}$ repräsentiert, die eine OH-Gruppe und ein Hydrat bei einem Ablauf von 0,1 Minuten ab einem Beginn von Wasserzugabe zeigt; und wobei " $I_{3600\,cm^{-1}}$ (0,1 Minuten)" eine Intensität einer Absorptionsspitze von ungefähr 3600 cm$^{-1}$ repräsentiert, die eine OH-Gruppe und ein Hydrat bei einem Ablauf von Aushärtezeit zeigt.

4. Zementpaste, Zementmörtel oder Zementbeton, die unter Verwendung des schnell härtenden Zements gemäß einem der Ansprüche 1 bis 3 hergestellt wurden.

5. Zementpaste, Zementmörtel oder Zementbeton nach Anspruch 4, wobei die Gelierzeit für eine Zunahme von 1°C bei 5°C 10 Minuten oder mehr beträgt.

6. Zementpaste, Zementmörtel oder Zementbeton nach Anspruch 4 oder Anspruch 5, wobei die Aushärtezeit bei 5°C 20 Minuten oder mehr beträgt.

7. Gehärtetes Material, das aus der Zementpaste, dem Zementmörtel oder Zementbeton gemäß einem der Ansprüche 4 bis 6 hergestellt wurde.

8. Verfahren zur Verwendung von Zementpaste, Zementmörtel oder Zementbeton, welches das Platzieren der Zementpaste, des Zementmörtels oder des Zementbetons gemäß einem der Ansprüche 4 bis 6 bei einer Umgebungstemperatur von 1 bis 10°C umfasst.

9. Verfahren zum Produzieren eines schnell härtenden Zements, umfassend:

Einen Schritt 1 der Behandlung eines Zements mit einem Wasser-Reduktionsmittel auf Polycarbonsäure basierend als ein Modifizierungsmittel, um einen oberflächenmodifizierten Zement zu formen, wobei eine Zusatzmenge des Modifizierungsmittels 0,1 bis 1,0% gewichtsmäßig in Bezug auf den Zement vor der Modifizierung beträgt;

einen Schritt 2 der Mischung des oberflächenmodifizierten Zements mit einem Schnellhärtemittel, das Calciumaluminat und Gips umfasst; und

einen Schritt 3 der Zugabe, zu irgendeinem Zeitpunkt, eines Abbindemodifizierungsmittels, das wenigstens eins aus einem Carbonat und/oder einer Hydroxycarbonsäure umfasst.

## Revendications

1. Ciment à durcissement rapide pour une utilisation dans la formation d'une pâte de ciment, de mortier ou de béton, comprenant :

(A) un ciment dont la surface a été pré-traitée avec un agent réducteur d'eau à base d'acide polycarboxylique à titre de modificateur ;

(B) un agent de durcissement rapide comprenant de l'aluminate de calcium et du gypse ; et

(C) un modificateur de prise comprenant au moins une substance parmi un carbonate et/ou un hydroxy-acide ;

cas dans lequel une quantité d'adjonction du modificateur est de 0,1 à 1,0 % par masse par rapport au ciment avant la modification.

2. Ciment à durcissement rapide selon la revendication 1, la quantité de (B) l'agent de durcissement rapide étant de 5 à 30 % par masse de la masse totale du ciment modifié et de l'agent de durcissement rapide, et la quantité du (C) modificateur de prise étant de 0,01 à 5 % par masse par rapport à la masse totale du ciment modifié et de l'agent de durcissement rapide.

3. Ciment à durcissement rapide selon la revendication 1 ou la revendication 2, satisfaisant une formule :

$$I_{3600 \text{ cm-1}} (0,1 \text{ minute})/I_{3600 \text{ cm-1}} (\text{durcissement}) \leq 0,2 \text{ ;}$$

où "$I_{3600 \text{ cm-1}}$ (0,1 minute)" représente une intensité d'un pic d'absorption dans un voisinage de 3600 $cm^{-1}$ montrant un groupe OH et un hydrate à un laps de 0,1 minute à partir d'un commencement de l'adjonction d'eau ; et
où "$I_{3600 \text{ cm-1}}$ (durcissement)" représente une intensité d'un pic d'absorption dans un voisinage de 3600 $cm^{-1}$ montrant un groupe OH et un hydrate à un laps du temps de durcissement.

4. Pâte de ciment, mortier de ciment, ou béton de ciment préparé grâce à l'utilisation du ciment à durcissement rapide selon l'une quelconque des revendications 1 à 3.

5. Pâte de ciment, mortier de ciment, ou béton de ciment selon la revendication 4, un temps de gélification pour un accroissement de 1°C à 5°C étant de 10 minutes ou davantage.

6. Pâte de ciment, mortier de ciment, ou béton de ciment selon la revendication 4 ou la revendication 5, un temps de durcissement à 5°C étant de 20 minutes ou davantage.

7. Matériau durci préparé à partir de la pâte de ciment, du mortier de ciment, ou du béton de ciment selon l'une quelconque des revendications 4 à 6.

8. Procédé d'utilisation d'une pâte de ciment, de mortier de ciment, ou de béton de ciment comprenant la mise en place de la pâte de ciment, du mortier de ciment, ou du béton de ciment selon l'une quelconque des revendications 4 à 6, à un environnement de températures de 1 à 10°C.

9. Procédé pour produire un ciment à durcissement rapide comprenant :

une étape 1 consistant à traiter un ciment avec un agent réducteur d'eau à base d'acide polycarboxylique à titre de modificateur afin de former un ciment à surface modifiée, cas dans lequel une quantité d'adjonction du modificateur est de 0,1 à 1,0 % par masse par rapport au ciment avant la modification ;
une étape 2 consistant à mélanger le ciment à surface modifiée avec un agent de durcissement rapide comprenant de l'aluminate de calcium et du gypse ; et
une étape 3 consistant à ajouter, à n'importe quel moment dans le temps, un modificateur de prise comprenant au moins une substance parmi un carbonate et/ou un hydroxy-acide.

# Figure 1

TEMPERATURE CHANGE DURING SETTING AND HARDENING OF RAPID HARDENING CEMENT MORTAR (WHOLE)

# Figure 2

TEMPERATURE CHANGE DURING SETTING AND HARDENING OF RAPID HARDENING CEMENT MORTAR (EARLY STAGE)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4746429 B
- JP H2180740 B
- JP 2007320833 A
- JP H9268037 B
- JP H6115986 B

- JP H11255542 B
- JP 2007045647 A
- US 2009025613 A1
- JP 2006335620 A
- EP 2161247 A1